(19) Europäisches Patentamt
European Patent Office
Office européen des brevets

(11) EP 2 853 553 A1

(12) **EUROPEAN PATENT APPLICATION**
published in accordance with Art. 153(4) EPC

(43) Date of publication:
**01.04.2015 Bulletin 2015/14**

(21) Application number: **13794646.3**

(22) Date of filing: **12.03.2013**

(51) Int Cl.:
***C08G 73/02*** *(2006.01)* ***C08G 69/48*** *(2006.01)*
***C08J 3/12*** *(2006.01)* ***C02F 1/28*** *(2006.01)*

(86) International application number:
**PCT/KR2013/001977**

(87) International publication number:
**WO 2013/176382 (28.11.2013 Gazette 2013/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.05.2012 KR 20120054537**

(71) Applicant: **Korea Advanced Institute Of Science And Technology**
**Daejeon 305-701 (KR)**

(72) Inventors:
- **KIM, Sang Youl**
**Daejeon 305-701 (KR)**
- **EOM, Young Sik**
**Daejeon 305-701 (KR)**

(74) Representative: **Epping - Hermann - Fischer Patentanwaltsgesellschaft mbH**
**Schloßschmidstraße 5**
**80639 München (DE)**

# (54) METHOD FOR PREPARING CROSS-LINKED HYPERBRANCHED POLYAMIDOAMINE PARTICLES USING REVERSE PHASE SUSPENSION POLYMERIZATION AND PRECURSOR

(57) Disclosed herein is a method of preparing hyperbranched polyamidoamine particles, including: a) preparing a polyamidoamine precursor mixture from a multifunctional amine monomer and a multifunctional acrylamide monomer; and b) polymerizing the polyamidoamine precursor mixture into cross-linked hyperbranched polyamidoamine particles using reverse phase suspension polymerization. Also, hyperbranched polyamidoamine particles prepared by the method are provided, which can remove heavy metals in an aqueous solution without the need for an ultrafiltration apparatus.

[Fig. 3]

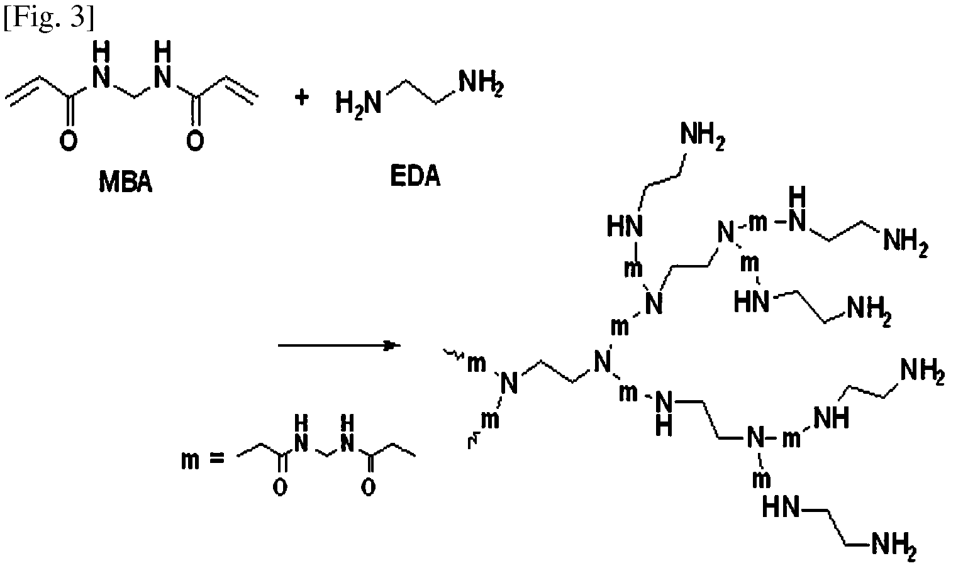


EP 2 853 553 A1

## Description

### Technical Field

The present invention relates to a method of preparing hyperbranched polyamidoamine particles from multifunctional monomers using reverse phase suspension polymerization and to hyperbranched polyamidoamine particles prepared thereby.

The hyperbranched polyamidoamine particles, which are prepared in the present invention, have amine and amide groups able to function as a coordination group of transition metal ions, and may thus be provided in the form of a complex compound with transition metal ions in an aqueous solution to thereby effectively remove the metal ions.

### Background Art

Generally, a variety of techniques are known to remove heavy metal ions from contaminated wastewater. Examples thereof may include methods related to micellar-enhanced ultrafiltration (MEUF) and polymer-supported ultrafiltration (PSUF) for removal of heavy metals.

Also, the removal of metal ions from contaminated wastewater using dendritic polymers has recently been developed. Korean Patent Application Publication No. 10-2007-0062972 (2007.06.18.), for example, discloses a method of producing a large amount of filtered water having no metal ions by bringing a large amount of contaminated water into contact with an agent in an amount sufficient to be bound with at least a portion of contaminants of the contaminated water to give a large amount of contaminant-bound dendrimer and then filtering the contaminant-bound dendrimer from the contaminated water.

The dendritic polymer possesses a continuous branch structure with many end groups and may be typically classified into a dendrimer with a regularly ordered branch structure and a hyperbranched polymer with an irregular branch structure.

The dendrimer, which is a polymer having a completely controlled structure, is configured such that either of two kinds of reactive groups is three dimensionally branched via repeated reactions of two or more monomers to thus exhibit an efficiently controlled size and shape. The dendrimer, however, has to be synthesized via multiple reaction steps and is complicated in terms of separation and purification procedures.

FIG. 1a) illustrates a dendrimer, wherein while the same monomer is repeated per branch, it extends out from the inside having a relatively large space and thus becomes spatially compact, making it possible to exist as an independent molecule, unlike linear polymers where chains are entangled.

In the dendrimer, a core, branches and surface groups at different structural positions may be imparted with different chemical properties. When chemical properties of branches and surface groups having many functional groups are chosen, interactions with specific materials may be enhanced or collection thereof is possible.

However, the dendrimer cannot be prepared at a time because two kinds of reactive groups have to be repetitively reacted, and multiple synthesis steps are needed, undesirably increasing the preparation cost; additionally, limitations are imposed on the size of growable molecules.

Compared to the dendrimer, a hyperbranched polymer may be synthesized via only a single polymerization step from an ABx ($x \geq 2$) monomer as a primary reaction product of multifunctional monomers A and B and is thus advantageous in light of easy synthesis and mass production. However, since the ABx monomer includes different (A and B) functional groups with two kinds of reactivities, multiple synthesis routes have to be carried out to form a monomer in ABx ($x \geq 2$) form.

FIG. 1b) illustrates a hyperbranched polymer having many functional groups on the surface thereof, as in the dendrimer. Unlike the dendrimer resulting from repetition of organic reactions, the hyperbranched polymer may be synthesized via one step polymerization, making it possible to achieve mass synthesis and thus exhibiting high industrial applicability.

Compared to the completely controlled dendrimer, the hyperbranched polymer has high Polydispersity and an irregular structure, but the structure thereof may be controlled by modifying the reactivity of the core and the reactivity of the intermediate and by adjusting the monomer addition rate.

The hyperbranched polymer is prepared from a typically useful AB2 monomer.

The AB2 monomer is a monomer having Portion A with a functional group and Portion B with two functional groups. The hyperbranched polymer synthesized therefrom may have a structure as illustrated in FIG. 2.

The hyperbranched polymer synthesized from the AB2 monomer may include three types of repeating units, such as dendritic, linear and terminal units, depending on the number of unreacted B functional groups, which is shown in FIG. 2.

However, the hyperbranched polymer using the AB2 monomer is difficult in terms of mass production due to a difficulty in monomer synthesis, and there are only a few commercialized kinds thereof. With the goal of overcoming

such problems, attempts have been recently made to synthesize a hyperbranched polymer from a mixture of multifunctional compounds having a large number of a single kind of reactive group. For example, as for formation of A'B'n-1 via reaction of specific multifunctional monomers A2 and Bn, when a chemical structure where the reactivity of A' or B' is remarkably lower than that of A or B is formed, products such as A'B'n-1, which are mainly obtained in the initial reaction, may be polymerized, resulting in a hyperbranched polymer.

Specifically, for example, a hyperbranched polymer may be prepared using, as monomers, A2 having two functional groups and B3 having three functional groups. Compared to AB2 monomer polymerization methods, polymerization of A2 + B3 monomers using A2 and B3 monomers enables easy synthesis of various polymer structures because A2 and B3 monomers may be commercially readily available at low cost and also because the range of monomer selection is wide.

Synthesis of a hyperbranched polymer using A2 + B3 monomers is represented in Chemical Formula 1 below.

Chemical Formula 1

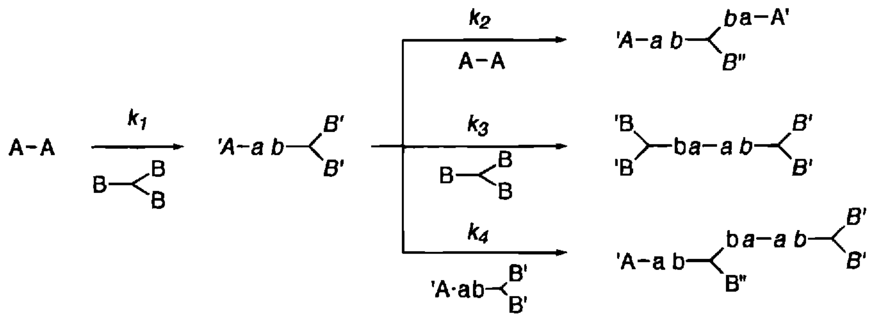

Alternatively, polymerization may be carried out such that the end groups of produced polymers are formed with either A or B under the reaction condition that there is a great difference in the molar ratio of monomers by slowly introducing any one of Am ($m \geq 2$) and Bn ($n \geq 3$) monomers as multifunctional monomers to the reaction mixture, ultimately attaining the same effect as polymerization of an ABx ($x \geq 2$) monomer.

Although the synthetic method using a mixture of multifunctional compounds having a plurality of such reactive groups is advantageous because the usable multifunctional monomers may be readily obtained, cross-linking upon polymerization of multifunctional monomers cannot be completely excluded. Hence, when the reaction reaches a critical extent of reaction estimated by Carothers or Flory equation, a polymer gel is obtained via cross-linking, and is not further dissolved in the solvent.

Meanwhile, thorough research into properties of the dendritic polymer having many branch units and end groups is ongoing.

As for a polyamidoamine dendrimer having many amine and amide functional groups, when such functional groups are used as ligands, heavy metal ions in the aqueous solution may be very effectively removed.

For instance, heavy metal ions may be removed using a dendrimer. Specifically, a dendrimer is mixed with wastewater containing heavy metals, after which a complex comprising the dendrimer and the heavy metal ions coordinated thereon may be separated from water using polymer-supported ultrafiltration. Thereafter, as the pH of water is lowered, the separated complex may be decomposed into the dendrimer and the heavy metal ions, which may then be individually recovered.

However, separation of the dendrimer coordinated with the metal ions from the aqueous solution undesirably needs ultrafiltration using a membrane, and improved methods thereof are thus required.

## Disclosure

### Technical Problem

Accordingly, an object of the present invention is to provide cross-linked hyperbranched polyamidoamine particles in hydrogel particle form having a size ranging from tens of to hundreds of μm, which are effective at removing heavy metal ions from an aqueous solution without the need of ultrafiltration, and a method of preparing the same.

Another object of the present invention is to provide a method of efficiently removing heavy metal ions from an aqueous solution with the use of the hyperbranched polyamidoamine particles according to the present invention via a simple filtration process in lieu of ultrafiltration using a membrane.

The technical objects, which are intended to be solved in the present invention, are not limited to the foregoing, with various modifications being possible within a range that does not depart from the spirit and scope of the present invention.

## Technical Solution

In order to accomplish the above objects, the present invention provides a method of preparing hyperbranched polyamidoamine particles, comprising: a) preparing a polyamidoamine precursor mixture from a multifunctional amine monomer and a multifunctional acrylamide monomer; and b) polymerizing the polyamidoamine precursor mixture into cross-linked hyperbranched polyamidoamine particles using reverse phase suspension polymerization.
In exemplary embodiments, the multifunctional amine monomer may be a monomer having at least two amine groups, and the multifunctional acrylamide monomer may be a monomer having at least two acrylic groups.
In exemplary embodiments, the multifunctional amine monomer may be amine that is a monomer having two amine groups, and the multifunctional acrylamide monomer may be a monomer having two acrylic groups.
In exemplary embodiments, preparing the polyamidoamine precursor mixture from the multifunctional amine monomer and the multifunctional acrylamide monomer may be performed by Michael addition between an amine monomer and an acrylamide monomer.
In exemplary embodiments, preparing the polyamidoamine precursor mixture may be performed in such a manner that any one monomer is slowly introduced with respect to the other monomer in an initial reaction upon preparation of the precursor mixture, and thereby the terminal of the polyamidoamine precursor mixture obtained in the initial reaction is composed exclusively of either an amine group or an acrylic group.
In exemplary embodiments, preparing the polyamidoamine precursor mixture may be performed in such a manner that monomers having different water solubilities are used upon reaction using water as a solvent, and thus even when the monomers are added all at once, the same effect as slow introduction of a monomer sparingly soluble in water to an aqueous solution including a monomer highly soluble in water is exhibited due to a difference in water solubility.
In exemplary embodiments, preparing the polyamidoamine precursor mixture may be performed at 0 to 50°C, and the monomers may have a concentration ranging from 20 to 80%.
In exemplary embodiments, the degree of cross-linking of the cross-linked hyperbranched polyamidoamine particles may be adjusted by changing a molar ratio of the multifunctional monomers without additional use of a cross-linking agent.
In exemplary embodiments, the reverse phase suspension polymerization may be performed in such a manner that an aqueous solution of the polyamidoamine precursor is dispersed in an organic solvent having a volume about 2 to 20 times a volume of the aqueous solution, and then reverse phase suspension polymerization is carried out at 30 to 80°C.
In exemplary embodiments, the organic solvent for the reverse phase suspension polymerization may be any one selected from among C5 to C12 aliphatic and alicyclic hydrocarbons, and C6 to C12 aromatic hydrocarbons, and the stabilizer may be any one or a mixture of two or more selected from among sorbitan esters of fatty acids including Span 60 and 80, 12-butinoyloxy-9-octadecenate, and poly(hydroxystearic acid)-co-poly(ethylene oxide) block copolymers.
In addition, the present invention provides hyperbranched polyamidoamine particles prepared by the method as above.
In exemplary embodiments, the hyperbranched polyamidoamine particles may have a size of 50 to 500 μm.
In addition, the present invention provides a method of removing a heavy metal from heavy metal-containing contaminated water using the hyperbranched polyamidoamine particles as above.

## Advantageous Effects

Although typical hydrogel or super absorbent polymer (SAP) particles are prepared by simultaneously inducing polymerization and cross-linking using monomers and a cross-linking agent, in the present invention, a hyperbranched polymer can be synthesized by preparing a polyamidoamine precursor mixture from multifunctional monomers and then performing reverse phase suspension polymerization, thus enabling the preparation of appropriately cross-linked hydrogel-type hyperbranched polyamidoamine particles without the additional use of a cross-linking agent and an initiator.
Also, the hyperbranched polyamidoamine particles according to the present invention can very efficiently remove heavy metal ions from an aqueous solution by a simple filtration process, without the need for ultrafiltration.

**Description of Drawings**

FIG. 1 schematically illustrates a typical dendrimer and hyperbranched polymer;
FIG. 2 illustrates a general structure of a hyperbranched polymer produced from an AB2 monomer;
FIG. 3 illustrates a reaction scheme for synthesis of hyperbranched polyamidoamine in Example 1 according to the present invention;
FIG. 4 illustrates the results of nuclear magnetic resonance (NMR) spectroscopy analysis of the polymer of Example 1 according to the present invention, showing proton spectra of MBA (a) and hyperbranched polyamidoamine (b);
FIG. 5 illustrates the results of thermogravimetric analysis (TGA) of the polymer of Example 1 according to the present invention;
FIG. 6 illustrates the results of infrared (IR) spectroscopy analysis of hyperbranched polyamidoamine (a) and hyperbranched polyamidoamine particles (b) of Examples 1 and 2 according to the present invention;
FIG. 7 illustrates polarized optical microscope images of the polyamidoamine particles of Example 2 according to the present invention;
FIG. 8 illustrates scanning electron microscope (SEM) images of the hyperbranched polyamidoamine particles of Example 2 according to the present invention;
FIG. 9 illustrates polarized optical microscope images of a variety of hyperbranched polyamidoamine particles depending on the monomer ratio in Example 3 according to the present invention: (a) hyperbranched polyamidoamine particles at a 1/1 ratio, (b) hyperbranched polyamidoamine particles at a 1.5/1 ratio, and (c) hyperbranched polyamidoamine particles at a 2/1 ratio; and
FIG. 10 illustrates the comparison results of water content of a variety of hyperbranched polyamidoamine particles depending on the monomer ratio in Example 4 according to the present invention.

**Mode for Invention**

Hereinafter, a detailed description will be given of hyperbranched polyamidoamine particles according to embodiments of the present invention with reference to the appended drawings. Reference will now be made in detail to various embodiments of the present invention, specific examples of which are illustrated and described below, since the embodiments of the present invention can be variously modified in many different forms. While the present invention will be described in conjunction with exemplary embodiments thereof, it is to be understood that the present description is not intended to limit the present invention to those exemplary embodiments. On the contrary, the present invention is intended to cover not only the exemplary embodiments, but also various alternatives, modifications, equivalents and other embodiments that may be included within the spirit and scope of the present invention as defined by the appended claims. For the sake of clear description, the dimensions of structures in the drawings are depicted to be exaggerated.
The terminology used herein is for the purpose of describing particular embodiments only and is not intended to be limiting. As used herein, the singular forms "a," "an" and "the" are intended to include the plural forms as well, unless the context clearly indicates otherwise. It will be further understood that the terms "comprise", "include", "have", etc. when used in this specification, specify the presence of stated features, numerals, steps, operations, elements, and/or combinations of them but do not preclude the presence or addition of one or more other features, numerals, steps, operations, elements, and/or combinations thereof.
Unless otherwise defined, all of the terms used herein including technical or scientific terms have the same meanings as those typically understood by persons having ordinary knowledge in the art to which the present invention belongs. The terms such as those defined in general dictionaries should be construed to match to the meanings in the contexts of the related art, and should not be interpreted ideally or exaggeratedly as the formal meanings, unless obviously defined herein.
The present invention addresses a method of preparing hyperbranched polyamidoamine particles, comprising: a) preparing a polyamidoamine precursor mixture from a multifunctional amine monomer and a multifunctional acrylamide monomer; and b) polymerizing the polyamidoamine precursor mixture into cross-linked hyperbranched polyamidoamine particles using reverse phase suspension polymerization.
According to an embodiment of the present invention, the multifunctional amine monomer and the multifunctional acrylamide monomer may be prepared into the polyamidoamine precursor mixture by Michael addition for reaction of a nitrogen atom of amine with carbon of the acrylic group of acrylamide. Also, Michael addition may be employed in the subsequent cross-linking reaction for preparing hyperbranched polyamidoamine particles using reverse phase suspension polymerization.
In the present invention, the polyamidoamine precursor mixture is an intermediate for producing the cross-linked hyperbranched polyamidoamine particles from the multifunctional amine monomer and the multifunctional acrylamide monomer, and is a mixture composed of oligomeric monomolecules. Examples thereof may include an oligomer obtained by reaction of an amine monomer and an acrylamide monomer, an oligomer obtained by reaction of two amine monomers and an acrylamide monomer, an oligomer obtained by reaction of an amine monomer and two acrylamide monomers, an oligomer obtained by reaction of two amine monomers and two acrylamide monomers, an oligomer obtained by reaction of three amine monomers and two acrylamide monomers, and an oligomer obtained by reaction of two amine monomers and three acrylamide monomers.

Specific amine and acrylamide compounds are exemplified by an alkylenediamine monomer (A) and a bisacrylamide monomer (B). When these monomers are used to prepare the polyamidoamine precursor mixture, linear oligomer compounds including A-B, A-B-A, B-A-B, A-B-A-B, B-A-B-A, A-B-A-B-A, B-A-B-A-B and so on may be obtained, and the mixture thereof indicates the polyamidoamine precursor mixture.

For the alkylenediamine, an amine group may be subjected to two Michael addition reactions with acrylamide, thus obtaining not only the linear oligomer compounds as above but also branched oligomer compounds configured such that two acrylamide groups are linked to an amine group, which may be incorporated in the polyamidoamine precursor mixture according to the present invention.

Specific examples of the branched oligomer compounds may include A(-B)-B, B-A-B(-B), (B-)B-A-B(-B), A(-B-A)-B, B-A-B(-B-A), etc., which may be incorporated in the polyamidoamine precursor mixture according to the present invention.

Useful in the present invention, the multifunctional amine monomer may be a monomer having at least two amine groups. It may include compounds having two or more amine groups at the terminal of the alkylene group, such as diamine, triamine or polyamine, and hydrogen at the middle position of the alkylene group may be substituted with an amine group or with an alkyl group including an amine group.

For the diamine, primary diamine may undergo additional cross-linking reaction because an amine group may be subjected to Michael addition with two acrylamides.

Examples of the multifunctional amine monomer useful in the present invention may include ethylenediamine, 1,2-diaminopropane, 1,4-diaminobutane, hexamethylenediamine, diethylenetriamine, triethylenetetramine, tris(2-aminoethyl)amine, diaminocyclohexane, pentaethylenehexamine, and 2-aminoethylpiperazine. Preferably useful are ethylenediamine, 1,4-butylenediamine and diethylenetriamine.

In the present invention, the multifunctional acrylamide monomer may be a monomer having at least two acrylic groups, and the number of acrylic groups of the multifunctional acrylamide monomer is preferably 2 to 3, and more preferably 2.

In an exemplary embodiment of the present invention, the multifunctional amine monomer may be diamine that is a monomer having two primary amine groups, and the multifunctional acrylamide monomer may be a monomer having two acrylic groups.

Examples of the multifunctional acrylamide monomer may include N,N'-methylenebisacrylamide, N,N'-(1,2-dihydroxyethylene)bisacrylamide, N,N'-ethylenebisacrylamide and ethidium bromide-N,N'-bisacrylamide. Preferably useful is N,N'-methylenebisacrylamide or N,N'-ethylenebisacrylamide.

In the present invention, preparing the polyamidoamine precursor mixture from the multifunctional amine monomer and the multifunctional acrylamide monomer may be performed by Michael addition between an amine monomer and an acrylamide monomer.

Michael addition involves nucleophilic addition of a vinyl group to an alpha position of a carbonyl group such as an acrylic group to thereby form chemical bonding between a nucleophile and carbon at a beta position of the carbonyl group. As for the reaction between ethylenediamine and an acrylic acid derivative, supposing that nitrogen of amine completely reacts with both of two vinyl groups, a compound represented by Chemical Formula 2 below may be obtained wherein $R_3$ corresponds to a functional group of the acrylic acid derivative.

Chemical Formula 2

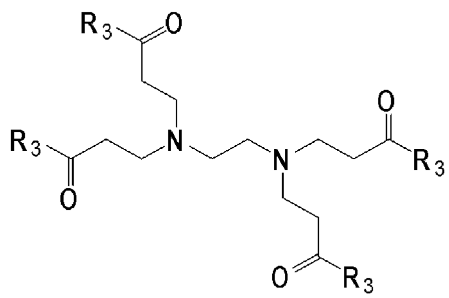

In the present invention, preparing the polyamidoamine precursor mixture may be performed in such a manner that any one monomer is slowly introduced with respect to the other monomer upon preparation of the precursor mixture, and thereby polymerization is carried out so that the end groups of polymers formed in the initial reaction are formed with any one specific monomer, yielding a hyperbranched polyamidoamine precursor mixture.

The terminals of the polyamidoamine precursor mixture obtained in the initial reaction using the monomers having amine and acrylic groups as above may be composed exclusively of either the amine group or the acrylic group.

In an exemplary embodiment, as for Michael addition of monomers having amine and acrylic groups, the monomer having the acrylic group may be slowly added dropwise to the solvent having the amine dissolved therein, whereby the terminals of the polyamidoamine precursor mixture obtained in the initial reaction may be formed with the amine group. On the other hand, the amine monomer may be slowly added dropwise to the solvent including the monomer having the acrylic group dissolved therein, whereby the terminals of the polyamidoamine precursor mixture obtained in the initial reaction may be formed with the acrylic group.

When the polyamidoamine precursor mixture is prepared in this way, additional cross-linking reaction may be suppressed, so that the oligomeric polyamidoamine precursor mixture may be stably produced.

Also, preparing the polyamidoamine precursor mixture may be easily performed by the selective use of monomers having different solubilities in water upon reaction in an aqueous solution phase. Specifically, a monomer having high water solubility is first dissolved in water to form an aqueous solution, after which a monomer sparingly soluble in water, namely, a monomer having low water solubility, is introduced all at once, ultimately exhibiting the same effect as slow introduction of a monomer sparingly soluble in water to an aqueous solution of a monomer highly soluble in water.

For example, in preparing the polyamidoamine precursor mixture by Michael addition of ethylenediamine and N,N'-methylenebisacrylamide, ethylenediamine that is a B4 monomer highly soluble in water may be efficiently dissolved in an aqueous solution, whereas N,N'-methylenebisacrylamide as an A2 monomer is sparingly soluble in water. Hence, even when N,N'-methylenebisacrylamide is introduced all at once to the ethylenediamine aqueous solution, N,N'-methylenebisacrylamide does not react all at once with ethylenediamine due to a difference in water solubility. In the initial reaction, as a large number of ethylenediamines are certainly present in the aqueous solution, the terminals of the polyamidoamine precursor mixture may be composed mainly of the amine group.

Thereafter, while the reaction continues, methylenebisacrylamide is slowly dissolved and thus Michael addition polymerization proceeds, thereby continuously preparing the hyperbranched polyamidoamine precursor mixture.

In an embodiment of the present invention, preparing the polyamidoamine precursor may be implemented at a temperature of 0 to 50°C and the concentration of the monomers may be adjusted to the range of 20 to 80%.

In preparing the cross-linked hyperbranched polyamidoamine particles according to the present invention, the degree of cross-linking may be adjusted by changing the molar ratio of the multifunctional monomers without the additional use of a cross-linking agent.

For example, when an A2 monomer and a B4 monomer are used, 1.0 to 2.0 mol A2 monomer is reacted with 1 mol B4 monomer and reverse phase suspension polymerization is carried out, yielding hyperbranched polyamidoamine particles that are appropriately cross-linked.

In an exemplary embodiment of the present invention, the cross-linked hyperbranched polyamidoamine particles may be prepared at different ratios of N,N'-methylenebisacrylamide [MBA] and ethylenediamine [EDA]. When the molar ratio of MBA and EDA is 1/1, 1.5/1 and 2/1, the degree of cross-linking may be assumed to increase in proportion to an increase in the amount of N,N'-methylenebisacrylamide.

This is because ethylenediamine is configured such that amines at both terminals thereof may react with two acrylic groups, thus further increasing the cross-linking potential.

As prepared in the present invention, the hyperbranched polyamidoamine particles may exhibit hydrogel properties having water swelling capabilities varying depending on the degree of cross-linking. Briefly, as the degree of cross-linking increases, water content of the resulting hyperbranched polyamidoamine particles may decrease.

In the second step of the present invention, the aqueous solution of the polyamidoamine precursor mixture is dispersed together with a stabilizer in an organic solvent having a volume about 2 to 20 times the volume of the aqueous solution and then reverse phase suspension polymerization may be carried out at 30 to 80°C.

When the aqueous solution of the polyamidoamine precursor mixture is dispersed with the use of a proper stabilizer in a solvent immiscible with water, such as toluene or cyclohexane, reverse phase suspension polymerization may be conducted, and thus cross-linking occurs, thereby forming hyperbranched polyamidoamine particles having a controlled size.

The reverse phase suspension polymerization is a polymerization method where water and oil phases are reversed upon suspension polymerization. Typical suspension polymerization is a polymerization method using water immiscible with a monomer, instead of a solvent. Specifically, when a monomer and an initiator to be dissolved therein are added to water and vigorously stirred, the monomer having the initiator dissolved therein is dispersed in small oil droplets, polymerization begins in the oil droplets, and then small polymer particles are dispersed in water. Since this suspension polymerization is conducted under the condition that the monomer particles are dispersed in water, the

polymerization heat is transferred to the medium (water) and thus there is no drastic increase in temperature and water may be easily removed from the produced polymer.

In contrast, reverse phase suspension polymerization is carried out under the condition that monomers dissolved in water are dispersed in oil, and is thus suitable for use in preparation of high absorbable polymers.

In an exemplary embodiment, the solvent for use in reverse phase suspension polymerization may be any one selected from among C5 to C12 alkanes, C5 to C12 cycloalkanes and C6 to C12 aromatic hydrocarbons, and the stabilizer may be any one or a mixture of two or more selected from among sorbitan esters of fatty acids including Span 60 and 80, 12-butinoyloxy-9-octadecenate, and poly(hydroxystearic acid)-co-poly(ethylene oxide) block copolymers.

In addition, the present invention addresses hyperbranched polyamidoamine particles obtained by preparing a polyamidoamine precursor mixture from a multifunctional amine monomer and a multifunctional acrylamide monomer and preparing hyperbranched polyamidoamine particles from the polyamidoamine precursor mixture using reverse phase suspension polymerization.

In addition, the present invention addresses hyperbranched polyamidoamine particles obtained by polymerizing a polyamidoamine precursor mixture resulting from subjecting a multifunctional amine monomer and a multifunctional acrylamide monomer to Michael addition in an aqueous solution phase, into cross-linked hyperbranched polyamidoamine particles using reverse phase suspension polymerization.

The hyperbranched polyamidoamine particles are capable of removing heavy metals from heavy metal-containing contaminated water without the use of ultrafiltration.

The size of the obtained hyperbranched polyamidoamine particles is 20 to 2000 $\mu$m, and preferably 50 to 500 $\mu$m.

The hyperbranched polyamidoamine particles according to the present invention obviate the need for ultrafiltration, and thus facilitate the removal of heavy metals in an aqueous solution by dispersing the hyperbranched polyamidoamine particles in a contaminated aqueous solution containing heavy metals, coordinating the heavy metals on the amine or amide groups in the hyperbranched polyamidoamine particles, and then filtering the aqueous solution containing the hyperbranched polyamidoamine particles.

Thereafter, the heavy metals may be removed from the hyperbranched polyamidoamine particles containing the heavy metals via pH control or the like, and thereby the hyperbranched polyamidoamine particles may be reused.

## Examples

Hyperbranched polyamidoamine and hyperbranched polyamidoamine particles according to the present invention were prepared in the following Examples 1 to 3.

The synthesized polymers were analyzed using NMR spectroscopy, IR spectroscopy and TGA. Specific analytical instruments are as follows.

NMR spectroscopy was performed using Fourier Transform AVANCE 400 spectrometer, and TGA was implemented using TA 2200 thermal analyzer system.

IR spectroscopy was conducted using Bruker EQUINOX-55 spectrometer, and the prepared hyperbranched polyamidoamine particles were observed using a polarized optical microscope and SEM.

Example 1 is directed to preparation of hyperbranched polyamidoamine according to the present invention, wherein hyperbranched polyamidoamine is synthesized by simple reaction of diamine and N,N'-methylenebisacrylamide without the use of reverse phase suspension polymerization.

FIG. 3 illustrates the chemical reaction scheme of Example 1 for synthesis of hyperbranched polyamidoamine via Michael addition polymerization of ethylenediamine and N,N'-methylenebisacrylamide.

As illustrated in FIG. 3, reactions of an amine group with two acrylic groups and with an acrylic group are shown together.

Example 2 is directed to preparation of hyperbranched polyamidoamine particles according to the present invention, wherein hyperbranched polyamidoamine particles are synthesized by preparing the polyamidoamine precursor mixture as above and polymerizing the polyamidoamine precursor mixture into cross-linked hyperbranched polyamidoamine particles using reverse phase suspension polymerization.

Example 3 is directed to preparation of a variety of hyperbranched polyamidoamine particles at different monomer ratios, wherein hyperbranched polyamidoamine particles are obtained from N,N'-methylenebisacrylamide [MBA] and ethylenediamine [EDA] at molar ratios of 1/1, 1.5/1 and 2/1.

Example 4 is directed to comparison testing of water content of a variety of hyperbranched polyamidoamine particles obtained at different monomer ratios.

Below is a description of specific methods for individual examples.

### Example 1: Synthesis of hyperbranched polyamidoamine

In a 50 mL 1-neck round-bottom flask, 0.4207 g (7 mmol) of ethylenediamine and 10 mL of water were placed

and well mixed with stirring at room temperature, after which 1.0793 g (7 mmol) of N,N'-methylenebisacrylamide was added. As the reaction proceeded, methylenebisacrylamide was slowly dissolved in water, and the reactants were stirred so as to be uniformly mixed, thus preparing a hyperbranched polyamidoamine precursor mixture. The reaction flask was filled with nitrogen and sealed with a rubber cap, after which the reaction was further carried out at 30°C for 6 hr, thus obtaining a hyperbranched polyamidoamine polymer, which was then cooled to room temperature and precipitated in cold acetone. The precipitate was filtered and the resulting solid was vacuum dried, yielding 1.33 g of hyperbranched polyamidoamine as desired.

1H NMR (400MHz, DMSO, ppm): 8.52, 4.35, 2.81-2.48, 2.19-2.17, 2.12, 1.87-1.76, 0.97-0.85
$T_{d5}$(°C): 229

FIG. 4 illustrates the results of NMR spectroscopy analysis of the polymer of Example 1 according to the present invention, showing proton spectra of MBA (a) and hyperbranched polyamidoamine (b). In FIG. 4(b), the hydrogen peak of the methylene group by Michael addition can be seen to result from the polymerization reaction.

Also, FIG. 5 illustrates the results of TGA of the polymer of Example 1.

Since the hyperbranched polyamidoamine polymer of Example 1 is produced in the form of fine particles, rather than particles having an appropriate size, it needs ultrafiltration to remove heavy metals.

**Example 2: Preparation of cross-linked hyperbranched polyamidoamine particles**

In a 10 mL 1-neck round-bottom flask, 0.4207 g (7 mmol) of ethylenediamine and 3 mL of water were placed and well mixed with stirring at room temperature, after which 1.0793 g (7 mmol) of N,N'-methylenebisacrylamide was added. As the reaction proceeded, methylenebisacrylamide was slowly dissolved in water, and the reactants were stirred so as to be uniformly mixed, thus preparing a hyperbranched polyamidoamine precursor. Thereafter, an aqueous solution of the precursor mixture thus prepared was placed in a 50 mL 3-neck round-bottom flask containing Span 60 (solbitan monostearate, 0.0075 g corresponding to 0.5 wt% of monomer) as a stabilizer for reverse phase suspension polymerization and 20 mL of toluene, and reverse phase suspension polymerization was carried out with stirring. The reaction mixture was reacted at 55°C for 8 hr, cooled to room temperature and then filtered. The obtained product was alternately washed with methanol and acetone, and vacuum dried, yielding 1.40 g of cross-linked hyperbranched polyamidoamine particles.

FIG. 6 illustrates the results of IR spectroscopy analysis of the hyperbranched polyamidoamine (a) and the hyperbranched polyamidoamine particles (b) of Examples 1 and 2 according to the present invention. As illustrated in FIG. 6, the peak was observed at 2600 to 3200 $cm^{-1}$ in the hyperbranched polyamidoamine particles, due to NH stretching, and the peak near 1650 $cm^{-1}$ was based on CO stretching. Also, the peak near 1540 $cm^{-1}$ was considered to be due to the stretching of amide amine (-CO-NH-) of polyamidoamine.

FIGS. 7 and 8 illustrate polarized optical microscope images and SEM images of the hyperbranched polyamidoamine particles of Example 2 according to the present invention.

As illustrated in FIGS. 7 and 8, the hyperbranched polyamidoamine particles according to the present invention are in spherical form, with a diameter of 50 to 500 μm and a very clear surface.

**Example 3: Preparation of a variety of hyperbranched polyamidoamine particles at different monomer ratios**

At different ratios of N,N'-methylenebisacrylamide [MBA] and ethylenediamine [EDA], cross-linked hyperbranched polyamidoamine particles were prepared in the same manner as in Example 2. The molar ratios of MBA and EDA were 1/1, 1.5/1 and 2/1 [MBA/EDA].

FIG. 9 illustrates polarized optical microscope images of a variety of hyperbranched polyamidoamine particles depending on the monomer ratio in Example 3 according to the present invention: (a) hyperbranched polyamidoamine particles at a 1/1 ratio, (b) hyperbranched polyamidoamine particles at a 1.5/1 ratio and (c) hyperbranched polyamidoamine particles at a 2/1 ratio.

As illustrated in FIG. 9, even when different monomer ratios are used, they can be seen to have no great influence on the size of the obtained hyperbranched polyamidoamine particles.

**Example 4: Comparison evaluation of water content of a variety of hyperbranched polyamidoamine particles obtained at different monomer ratios**

Three kinds of hyperbranched polyamidoamine particles prepared in Example 3 were measured for their water content. The three kinds of cross-linked hyperbranched polyamidoamine particles were placed in respective glass bottles, and added with distilled water. After 72 hr, hydrated particles were filtered and weighed. Further, the hydrated particles were vacuum dried and then weighed. The water content is calculated by the following equation.

$$Water\ Content\ (\%) = \frac{wet\ particles\ (g) - dry\ particles\ (g)}{dry\ particles\ (g)} \times 100\ (\%)$$

The water content values of the cross-linked hyperbranched polyamidoamine particles at monomer ratios of 1/1, 1.5/1 and 2/1 were calculated to be 993 wt%, 179 wt%, and 98 wt%, respectively.

FIG. 10 illustrates the comparison results of water content of a variety of hyperbranched polyamidoamine particles depending on the monomer ratio in Example 4 according to the present invention.

The left photograph shows hyperbranched polyamidoamine particles without water, and the right photograph shows hyperbranched polyamidoamine particles with water. As shown in the right photograph, when the ratio of N,N'-methylenebisacrylamide [MBA] and ethylenediamine [EDA] is 1:1, the highest water content may result.

Although the preferred embodiments of the present invention have been disclosed as above, those skilled in the art will appreciate that such embodiments are set forth to illustrate, but are not to be construed as limiting the scope of the present invention.

## Industrial Applicability

The present invention pertains to hyperbranched polyamidoamine hydrogel particles, which are appropriately cross-linked using multifunctional monomers such as A2 and B4 by Michael addition polymerization even without the additional use of a cross-linking agent. The use of cross-linked hyperbranched polyamidoamine particles having a size ranging from tens of to hundreds of μm according to the present invention enables heavy metal ions in an aqueous solution to be very efficiently removed by only a simple filtration process and can thus be applied to water purification.

## Claims

**1.** A method of preparing hyperbranched polyamidoamine particles, comprising:

a) preparing a polyamidoamine precursor mixture from a multifunctional amine monomer and a multifunctional acrylamide monomer; and
b) polymerizing the polyamidoamine precursor mixture into cross-linked hyperbranched polyamidoamine particles using reverse phase suspension polymerization.

**2.** The method of claim 1, wherein the multifunctional amine monomer is a monomer having at least two amine groups.

**3.** The method of claim 1, wherein the multifunctional acrylamide monomer is a monomer having at least two acrylic groups.

**4.** The method of claim 1, wherein the multifunctional amine monomer is diamine that is a monomer having two primary amine groups, and the multifunctional acrylamide monomer is a monomer having two acrylic groups.

**5.** The method of claim 1, wherein preparing the polyamidoamine precursor mixture from the multifunctional amine monomer and the multifunctional acrylamide monomer is performed by Michael addition between an amine monomer and an acrylamide monomer.

**6.** The method of claim 5, wherein preparing the polyamidoamine precursor mixture is performed in such a manner that any one monomer is slowly introduced with respect to the other monomer upon preparation of the precursor mixture, and thereby a terminal of the polyamidoamine precursor mixture obtained in an initial reaction is composed of an amine group or an acrylic group.

**7.** The method of claim 5, wherein preparing the polyamidoamine precursor mixture is performed in such a manner that monomers having different water solubilities are used upon reaction using water as a solvent, and thus even when the monomers are added all at once, the same effect as slow introduction of a monomer sparingly soluble in water to a monomer highly soluble in water in an aqueous solution phase is exhibited due to a difference in water solubility.

**8.** The method of claim 1, wherein preparing the polyamidoamine precursor mixture is performed at 0 to 50°C, and the monomers have a concentration ranging from 20 to 80%.

**9.** The method of claim 1, wherein a degree of cross-linking of the cross-linked hyperbranched polyamidoamine particles is adjusted by changing a molar ratio of the multifunctional monomers without additional use of a cross-linking agent.

**10.** The method of claim 1, wherein the reverse phase suspension polymerization is performed in such a manner that an aqueous solution of the polyamidoamine precursor is dispersed together with a stabilizer in an organic solvent having a volume 2 to 20 times a volume of the aqueous solution, and then reverse phase suspension polymerization is carried out at 30 to 80°C.

**11.** The method of claim 10, wherein the organic solvent for the reverse phase suspension polymerization is any one selected from among C5 to C12 aliphatic hydrocarbons, C5 to C12 alicyclic hydrocarbons, and C6 to C12 aromatic hydrocarbons, and the stabilizer is any one or a mixture of two or more selected from among sorbitan esters of fatty acids including Span 60 and 80, 12-butinoyloxy-9-octadecenate, and poly(hydroxystearic acid)-co-poly(ethylene oxide) block copolymers.

**12.** Hyperbranched polyamidoamine particles prepared by the method of any one of claims 1 to 11.

**13.** The hyperbranched polyamidoamine particles of claim 12, wherein the hyperbranched polyamidoamine particles have a size of 50 to 500 μm.

**14.** A method of removing a heavy metal from heavy metal-containing contaminated water using the hyperbranched polyamidoamine particles of claim 12 without use of ultrafiltration.

**15.** A method of removing a heavy metal from heavy metal-containing contaminated water using the hyperbranched polyamidoamine particles of claim 13 without use of ultrafiltration.

**16.** Hyperbranched polyamidoamine particles, obtained by polymerizing a polyamidoamine precursor mixture resulting from subjecting a multifunctional amine monomer and a multifunctional acrylamide monomer to Michael addition in an aqueous solution phase, into cross-linked hyperbranched polyamidoamine particles using reverse phase suspension polymerization.

**17.** A method of removing a heavy metal from heavy metal-containing contaminated water using the hyperbranched polyamidoamine particles of claim 16 without use of ultrafiltration.

[Fig. 1]

a)

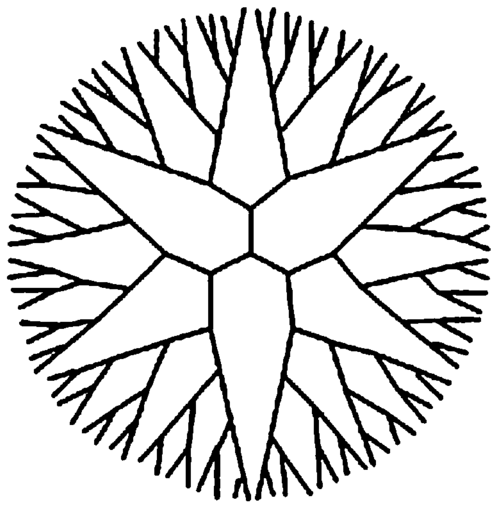

b)

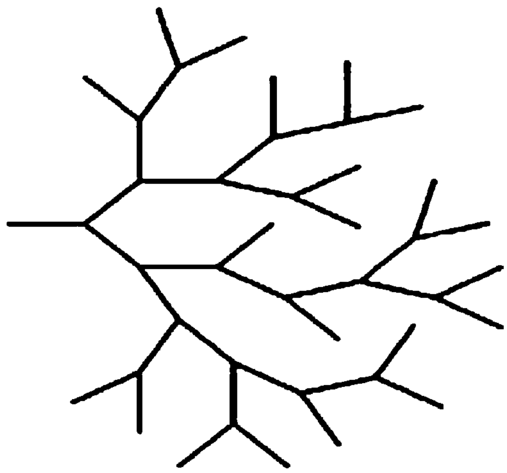

[Fig. 2]

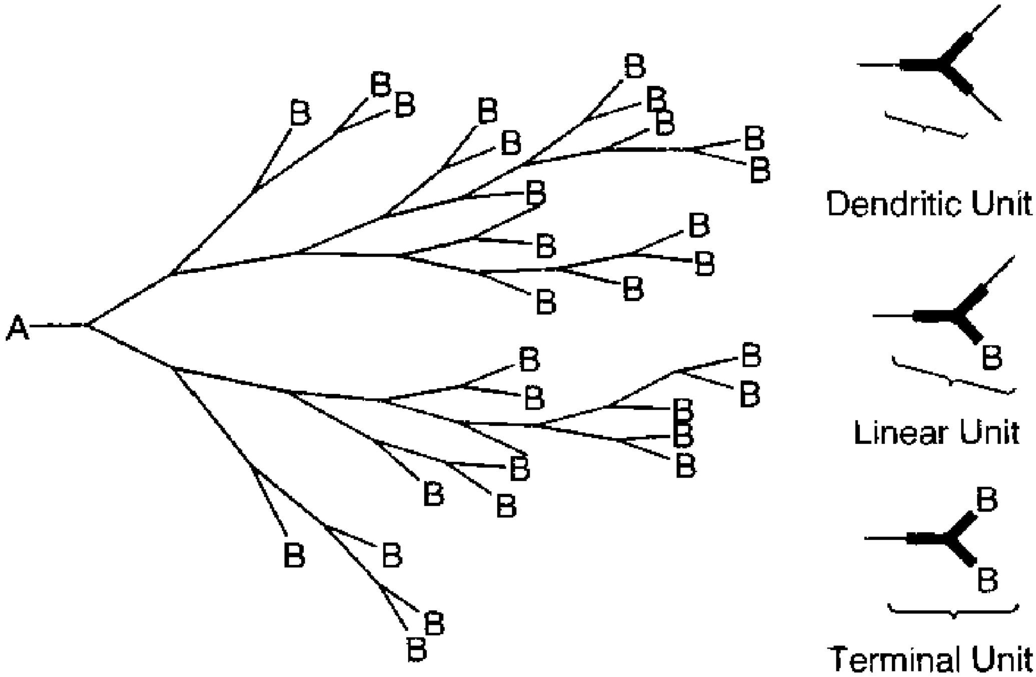


[Fig. 3]

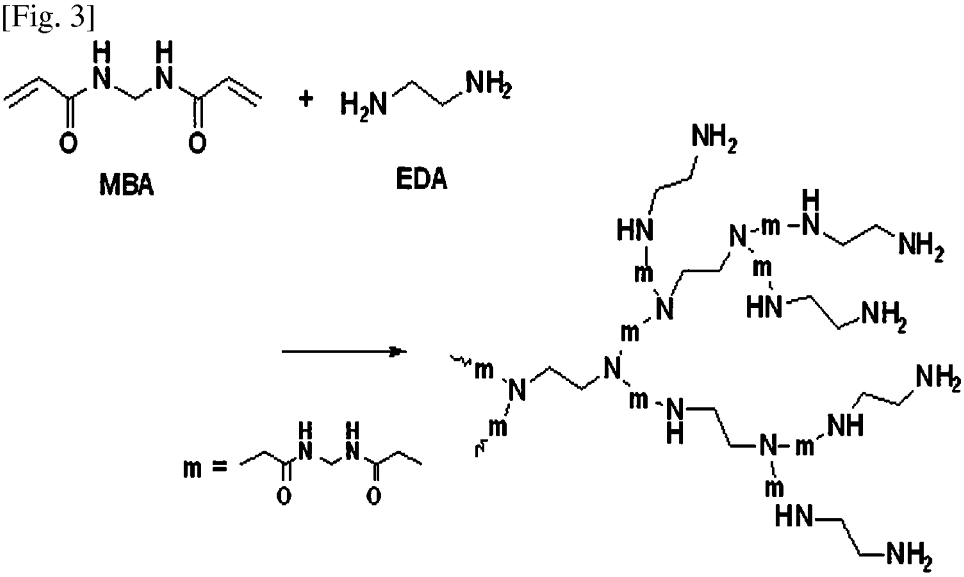

MBA

EDA

[Fig. 4]

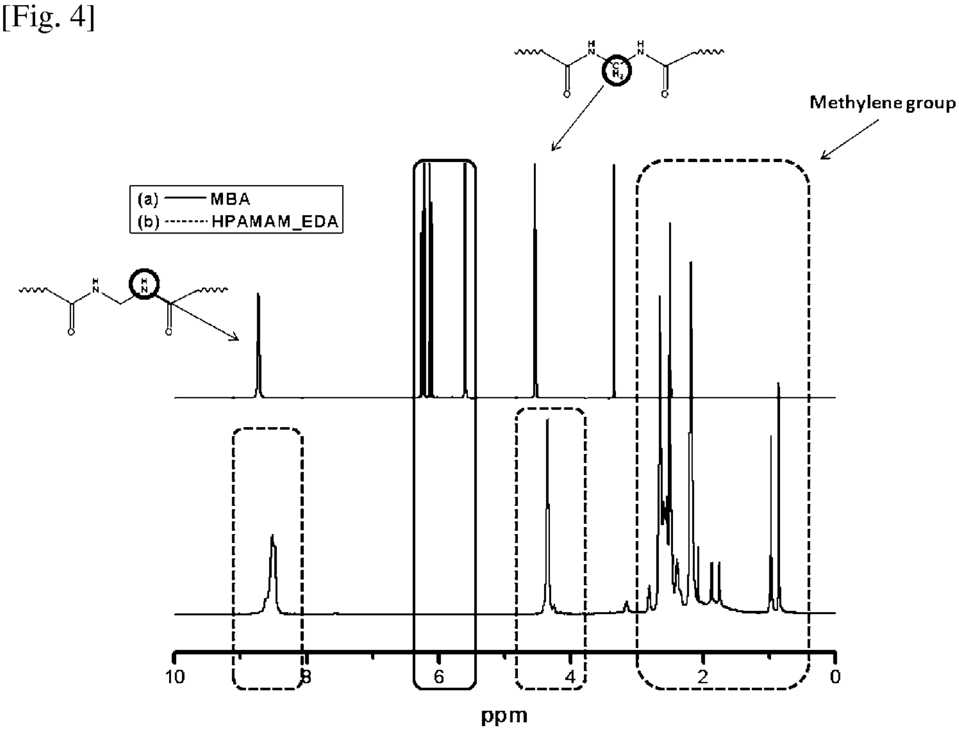
Methylene group
(a) MBA
(b) HPAMAM_EDA
10
8
6
4
2
0
ppm

[Fig. 5]

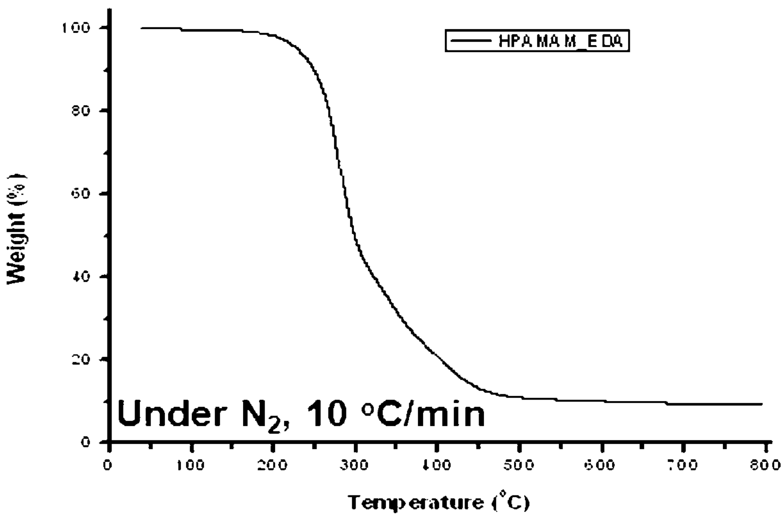
HPAMAM_EDA
Under N2, 10 °C/min
Weight (%)
Temperature (°C)
0
20
40
60
80
100
0
100
200
300
400
500
600
700
800

[Fig. 6]

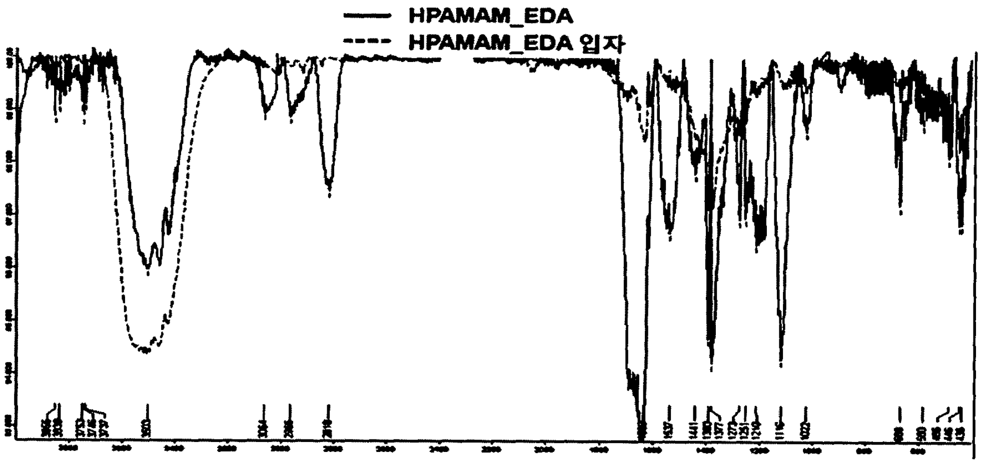


[Fig. 7]

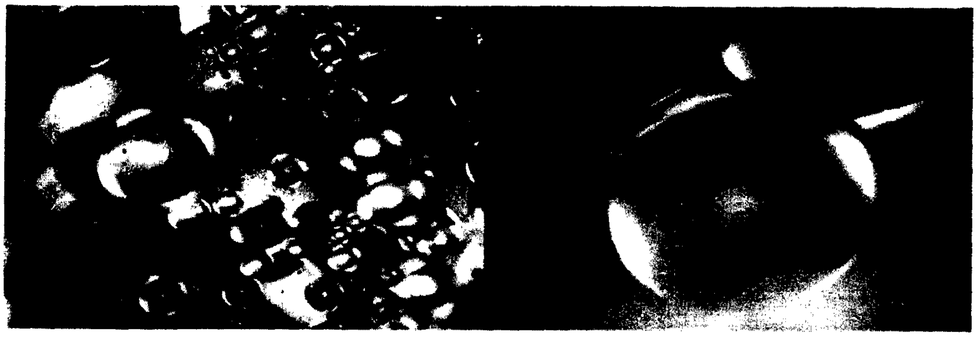

[Fig. 8]

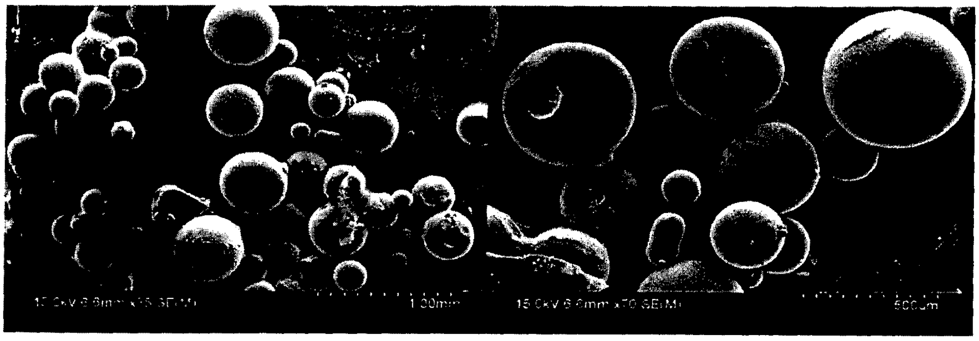

[Fig. 9]

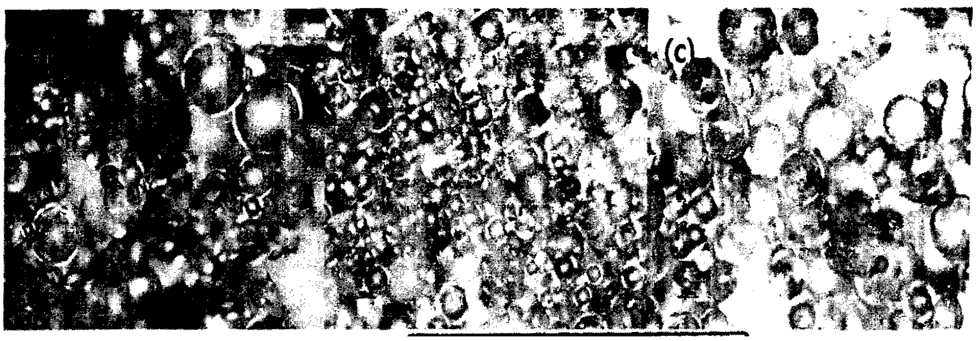

[Fig. 10]

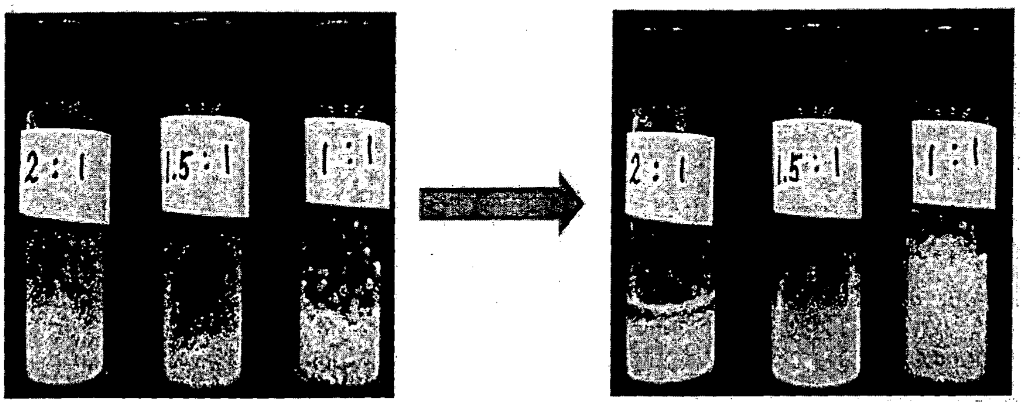

## INTERNATIONAL SEARCH REPORT

International application No.
**PCT/KR2013/001977**

A. CLASSIFICATION OF SUBJECT MATTER

***C08G 73/02(2006.01)i, C08G 69/48(2006.01)i, C08J 3/12(2006.01)i, C02F 1/28(2006.01)i***

According to International Patent Classification (IPC) or to both national classification and IPC

B. FIELDS SEARCHED

Minimum documentation searched (classification system followed by classification symbols)
C08G 73/02; C08G 69/02; C02F 1/28; A61K 31/221; A61K 31/132; C08G 69/34

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: multi functional amine, multi functional acrylamide, polyamidoamine

C. DOCUMENTS CONSIDERED TO BE RELEVANT

| Category* | Citation of document, with indication, where appropriate, of the relevant passages | Relevant to claim No. |
|---|---|---|
| A | US 2010-0093857 A1 (DHAL, Pradeep K. et al.) 15 April 2010<br>See abstract, claim 1 - 58 | 1-17 |
| A | US 2007-0265468 A1 (LANCE, Twyman et al.) 15 November 2007<br>See abstract, claims 1 - 88 | 1-17 |
| A | KR 10-2007-0062972 A (CALIFORNIA INSTITUTE OF TECHNOLOGY) 18 June 2007<br>See abstract, claims 1 - 21 | 1-17 |
| A | KR 10-0933605 B1 (HERCULES INCORPORATED) 23 December 2009<br>See abstract, claims 1 - 41 | 1-17 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 JUNE 2013 (25.06.2013) | **26 JUNE 2013 (26.06.2013)** |
| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

INTERNATIONAL SEARCH REPORT
Information on patent family members

International application No.
PCT/KR2013/001977

| Patent document cited in search report | Publication date | Patent family member | Publication date |
|---|---|---|---|
| US 2010-0093857 A1 | 15.04.2010 | EP 2120972 A1 | 25.11.2009 |
| | | JP 2010-513271 A | 30.04.2010 |
| | | US 2012-237470 A1 | 20.09.2012 |
| | | US 8163799 B2 | 24.04.2012 |
| | | WO 2008-076242 A1 | 26.06.2008 |
| US 2007-0265468 A1 | 15.11.2007 | AU 2003-251345 A1 | 16.02.2004 |
| | | EP 1546239 A1 | 29.06.2005 |
| | | GB 0217298 D0 | 04.09.2002 |
| | | GB 0317244 D0 | 27.08.2003 |
| | | GB 2393446 A | 31.03.2004 |
| | | WO 2004-011527 A1 | 05.02.2004 |
| KR 10-2007-0062972 A | 18.06.2007 | AU 2005-328706 A1 | 14.09.2006 |
| | | CA 2578338 A1 | 14.09.2006 |
| | | CA 2607306 A1 | 23.04.2008 |
| | | CN 101006017 A | 25.07.2007 |
| | | EP 1771384 A2 | 11.04.2007 |
| | | JP 2008-506519 A | 06.03.2008 |
| | | US 2006-0021938 A1 | 02.02.2006 |
| | | US 2008-0185341 A1 | 07.08.2008 |
| | | US 2009-0223896 A1 | 10.09.2009 |
| | | US 7470369 B2 | 30.12.2008 |
| | | US 7758755 B2 | 20.07.2010 |
| | | WO 2006-096199 A3 | 14.09.2006 |
| | | WO 2008-136814 A3 | 13.11.2008 |
| KR 10-0933605 B1 | 23.12.2009 | AU 2002-357936 A1 | 24.07.2003 |
| | | AU 2002-357936 B2 | 29.03.2007 |
| | | CA 2468930 A1 | 17.07.2003 |
| | | CN 1608094 A | 20.04.2005 |
| | | EP 1458789 A1 | 22.09.2004 |
| | | JP 04-482331 B2 | 26.03.2010 |
| | | JP 2005-514485 A | 19.05.2005 |
| | | US 2003-0153722 A1 | 14.08.2003 |
| | | US 6667384 B2 | 23.12.2003 |
| | | WO 03-057760 A1 | 17.07.2003 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020070062972